# EUROPEAN PATENT SPECIFICATION

(11) **EP 2 662 495 B1**
(45) Date of publication and mention of the grant of the patent: **16.08.2017**
(21) Application number: 12382171.2
(22) Date of filing: 09.05.2012
(51) Int. Cl.: E02D 5/22, E02B 17/02, E04H 12/10, E04H 12/00, F03D 13/20, E04H 12/22, E02B 17/00, F03D 1/00

(54) **Wind turbine foundation**
Windturbinenfundament
Fondation d'éolienne

(43) Date of publication of application: 13.11.2013
(73) Proprietor: GE Renewable Technologies, 38100 Grenoble (FR)
(72) Inventor: Rodriguez Tsouroukdissian, Arturo, 08011 BARCELONA (ES); Lanca Coelho, Miguel, 08018 BARCELONA (ES); Santiago Lopez, Manuel, 08005 BARCELONA (ES)
(74) Representative: ZBM Patents - Zea, Barlocci & Markvardsen

(56) References cited:
- EP-A1- 1 624 137
- EP-A1- 1 947 328
- US-A1- 2006 185 279

## Description

A foundation for a wind turbine is disclosed herein. The present wind turbine foundation is particularly suitable for, but not limited to, wind turbine pile foundations in offshore structures. A wind turbine comprising such a foundation is also disclosed herein.

### BACKGROUND

Several types of foundations are known in the art for wind turbine applications (see for example US 2006185279). One common type of foundations which is particularly well known in many offshore structures are piled foundations. Piled foundations are widely used for transferring structural loads to the ground.

Piled foundations may consist of one pile, referred to as mono-pile foundations, or a number of piles arranged in different ways according to the requirements.

Piles consist of steel elongated pieces intended to be driven into a surface, such as the ground or the seabed. Piles are shaped for receiving corresponding pins.

Pins are elongated connecting members extending downwards from a wind turbine foundation.

A jacket is a lattice substructure that comprises a number of tubes connected to each other by means of bracings and tubular joints. A transition piece connects and supports the lower part of the wind turbine tower to the substructure.

When the pins are inserted into the corresponding piles a high performance concrete-like mass such as grout is injected. Grout injection serves the purpose of establishing a firm connection between the piles and the pins. Grout injection also helps to avoid undesirable horizontal deflections and inhibit corrosion. Grout provides an increased energy absorption capacity to the structure. Grout is injected typically through the bottom of a chamber formed between the pile and the pin thus forming a grouted joint. The width of the chamber or annulus between the pile and the pin can be maintained constant through the use of centralizers.

The above grouted joints are well known in offshore oil and gas structures. Such field is however totally dynamically different from wind turbine foundations.

The piles in a wind turbine foundation are subjected to highly cyclic tension and compressive loading due to the wind and waves action. The substructure formed by the transition piece and the foundation is under high hydrodynamic and aerodynamic loads. Such loads are transferred from the tower, the nacelle and the rotor structure of the wind turbine to the seabed. Demands for higher power output and the decrease in the number of sites with high wind availability and good access cause wind farms to have larger turbines that must be mounted higher and thus be more inaccessible. Wind turbine substructures must be thus oversized in order to withstand high loads, making their manufacturing and installation processes undesirably costly.

For increasing load capacity and stiffness of the pile-pin connection the use of shear keys are known and used in the art. Shear keys consist of spaced weld beads or steel bars that are welded on the inner surface of the piles and on the outer surface of the pins. In use, the shear keys are intended to be in contact with the grout once injected within the chamber. This solution is currently used in known offshore wind turbine foundations for the transfer of shear forces. It has been proven to be efficient particularly in increasing the sliding resistance between the grout and the pile and the pin. One example of the use of shear keys is disclosed in US2006185279.

Shear keys however require welding on the outer surfaces of the pins and on the inner surfaces of the piles. This is involves costly and complex operations and often require several welding passes.

A more efficient yet cost effective grout connection would be desirable for wind turbine structures, special in offshore structures, in order to make wind energy industry projects economically feasible.

### SUMMARY

A foundation for a wind turbine as defined in claim 1 is disclosed herein. The present wind turbine foundation is particularly suitable for, but not limited to, wind turbine pile foundations in offshore structures. A wind turbine comprising such a foundation as defined in claim 16 is also disclosed herein. Advantageous embodiments are defined in the dependent claims.

The present wind turbine foundation is intended for connecting a wind turbine tower to a surface, such as the seabed in an offshore wind turbine.

The present wind turbine foundation comprises at least one substantially elongated pin, which is associated with a wind turbine foundation, and at least one corresponding pile to be inserted into the seabed. Definitions are given below.

As used herein, a pin refers to an elongated connecting member, made e.g. of steel, extending downwards from a wind turbine foundation substructure. The pins have a connecting end to be attached to the wind turbine tower through said turbine foundation substructure, and an inserting end, opposite the connecting end. In preferred embodiments the pins may be cylindrical in shape.

The wind turbine foundation may comprise a jacket consisting of a lattice substructure that comprises a number of tubes. The tubes are connected to each other by means of bracings, tubular joints and the like. A transition piece connects and supports the lower part of the wind turbine tower to the jacket.

As used herein, a pile consists of an elongated connecting member, made e.g. of steel. The piles are driven several tens of metres into a surface such as the ground in the case of onshore wind turbines or such as the seabed in the case of offshore wind turbines. The piles are shaped for receiving at least one portion or section of the length of corresponding pins, that is, the pins can be at least partially inserted, i.e. through their inserting ends, into the corresponding piles when in use. For this purposed, the inserting end of the pins may be guided. In preferred embodiments the piles may be cylindrical in shape.

A grouting chamber in the form of an annular space is defined between the pin and the pile when in use, that is, when the pin is at least partially inserted into the corresponding pile. Such grouting chamber defined between the pin and the pile is suitable for receiving grout.

As used herein, the term grout includes any cementitious settable material or mixture of settable materials. Grout is used for the support of the present wind turbine foundation. The grout connection thus formed is subjected to compressive and shear load transfer at the chamber.

At least one of the pin and the pile in the present wind turbine foundation is provided with one or more connecting plates made, e.g. of high grade steel, extending inside the grouting chamber. The connecting plates are provided with one or more holes through which the grout passes when in use.

The arrangement of the connecting plates is such that their length dimension extends lengthwise within the chamber and their width dimension extend through the gap of the chamber defined between the pile and the corresponding pin at least partially fitted therein. In some cases, at least one portion of such length and width dimensions could extend out of the grouting chamber.

One example of connecting plates is the so called Perfobond connectors. Perfobond connectors consist of plates with several openings or holes formed therein. Holes are preferably circular but they can assume other shapes such as oval or polygonal as required. Perfobond connectors are mainly defined by the number and size of the openings or holes, the number of plates and their length and width, and the spacing of the openings or holes. These parameters can be conveniently varied according to the wind turbine foundation characteristics. For example, in a typical offshore wind farm it is preferred that the ratio of the distance between the centres two adjacent holes in a connecting plate to the diameter of the holes ranges from 2.20 to 2.40. For example, the number of connecting plates may range from 2 to 16. For example, the ratio of the distance between two adjacent connecting plates to the perimeter of at least one of the pin and the pile may range from 1/2 to 1/16.

The above wind turbine foundation provides a very strong connection of the wind turbine to the ground with a high load capacity in terms of high shear resistance. Perfobond connectors are highly efficient in high axial loaded structures such as piled foundations in offshore wind turbines. Since the load transition takes place by the grout passing through the holes in the plate, higher compression capacity can be allowed and therefore an increased shear resistance.

As stated above, the pins or the piles, or both the pins and the piles, in the present wind turbine foundation may be provided with such connecting plates. In any case, the connecting plates can easily be welded by a single weld pass to the pins or piles (or both) such that the connecting plates extend inside the chamber. In this regard, several embodiments are envisaged. Both the pin and the pile may be provided with connecting plates. At least some of the connecting plates may extend along at least one section or portion of the length of the at least one of the pin and the pile within the chamber. At least some of the connecting plates may extend inside the chamber such that they are not aligned with the centre of at least one of the pin and the pile. Yet in further embodiments, at least some of the connecting plates may be radially distributed along the perimeter of the at least one of the pin and the pile. Other embodiments of the present wind turbine foundation are also envisaged in which at least some of the connecting plates of the pin are substantially aligned with at least some of the corresponding connecting plates of the pile. The aligned connecting plates of the pin and the pile may extend substantially covering the width of the grouting chamber. Still in further embodiments, at least some of the connecting plates may be arranged symmetrically around the surface of at least one of the pin and the pile.

At least some of the pins may have a guiding end arranged opposite to its connection with the wind turbine and a stopping element extending, e.g. radially, inside the grouting chamber adapted to receive said guiding end such that when the pile is inserted into the pile the guiding end is fitted in the stopping element. In some cases, the guiding end may comprise a protruding element for centralizing the pin when mounting it into a pile.

The stopping element may comprise a cup, e.g. made of a high grade polymer, intended to be received into a central seat formed in the stopping element and wherein it further comprises a disc radially extending from the central seat towards the inner side of the pile.

The stopping element may be welded to the inner wall of the pile. Other ways for attaching the stopping elements to the piles are not ruled out. The stopping element could be also even formed integrally with the pile.

Yet in further embodiments, the stopping element may further comprise a disc radially extending from the central seat towards the inner side of the pile.

The stopping element may also have a plurality of bars radially extending from the central seat towards the inner side of the pile. Disc segments may be provided in between the bars.

With the above defined wind turbine foundation a good fatigue resistance structure is obtained which is particularly useful in offshore wind turbine foundations. The present wind turbine foundation may be however useful in onshore wind turbine foundations.

The higher load capacity of the present wind turbine foundation over prior art foundations in which headed stud connectors or shear keys are used renders the present wind turbine foundation very advantageous for wind turbine applications. It has been shown that the connection behaviour until maximum loads are reached is essentially elastic as opposed to what happens in prior art solutions where important plastic slip is developed when maximum loads have been attained.

A more effective shear transfer is thus obtained by using the present robust, reliable, and easy to manufacture and install wind turbine foundation. This is mainly due to the improved load path transmission between the piles and pins and the grout within the chamber. The present wind turbine foundation provides a stiff and ductile connection of the wind turbine foundation to the seabed, which connection has excellent fatigue resistance.

Additional objects, advantages and features of embodiments of the present wind turbine foundation will become apparent to those skilled in the art upon examination of the description, or may be learned by practice thereof.

### BRIEF DESCRIPTION OF THE DRAWINGS

Particular embodiments of the present wind turbine foundation will be described in the following by way of several non-limiting examples, with reference to the appended drawings, in which:
Figure 1 is a general elevational view of an offshore wind turbine;

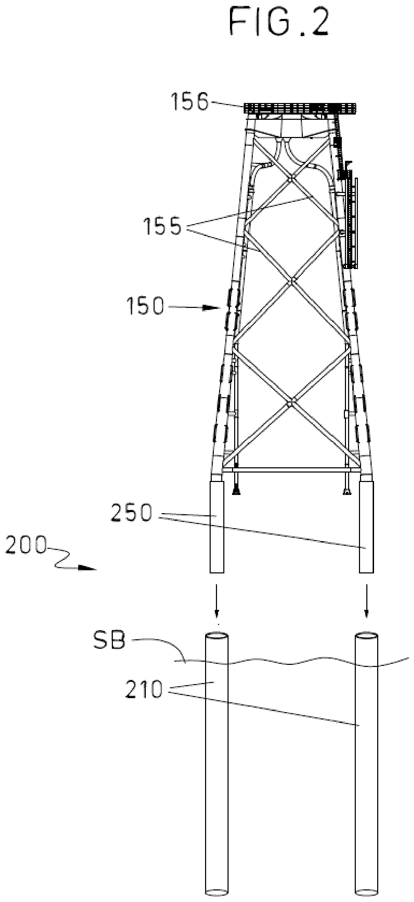

Figure 2 is a diagrammatic part view of one embodiment of the present wind turbine foundation;
Figure 3a is an elevational sectional view of one embodiment of the present wind turbine foundation in which one pin is shown fitted in one corresponding pile, with the pin fitted with connecting plates;
Figure 3b is a elevational sectional view of an alternative embodiment to the wind turbine foundation in figure 3a in which both the pin and the pile is fitted with connecting plates;
Figure 3c is a diagrammatic enlarged elevational view of a connecting plate of the Perfobond connector type;
Figures 4a-4e are top plan views of pin-pile arrangements showing different embodiments of the wind turbine foundation according to different connecting plate arrangements within the grouting chamber;
Figure 5 is an enlarged elevational sectional view of the embodiment shown in figures 3a or 3b;
Figure 6 is a top plan view of a further embodiment of the present stopping element; and
Figure 7 is a perspective sectional part view of the embodiment of the present stopping element in figure 6.

### DETAILED DESCRIPTION OF EMBODIMENTS

Several embodiments of the wind turbine foundation are shown in the figures which will be disclosed herein as non-limiting examples. Like reference numerals refer to like parts throughout the description of the figures.

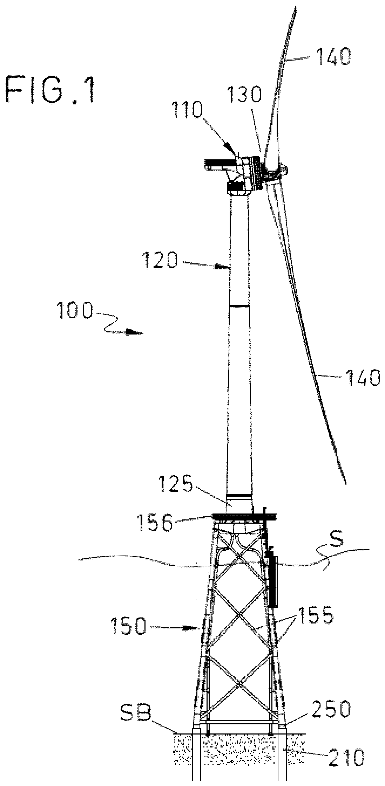

Figure 1 generally shows an offshore wind turbine 100 installed on the sea S. The offshore wind turbine 100 mainly comprises a nacelle 110 that is fitted at the upper end of a tower 120. The nacelle 110 of the offshore wind turbine 100 is provided with a rotor hub 130 provided with blades 140 for capturing the action of the wind for electricity production.

In the particular and non-limiting embodiment shown in the figures, the wind turbine foundation comprises a jacket substructure 150 provided at a platform 156 in the bottom portion of a transition piece 125. The jacket substructure 150 is formed of a number of tubes 155 connected to each other. The transition piece 125 is provided for connecting the platform 156 to the bottom portion of the wind turbine tower 120 as shown in figure 1 of the drawings.

Apart from the above configuration for the wind turbine foundation, comprising (from top to bottom) a transition piece 125, a platform 156 and a jacket substructure 150, other configurations could be also possible, such as those comprising (from top to bottom) a transition piece 125 and a jacket substructure 150, and a small platform attached to the jacket or the transition piece which is only for operations of maintenance and access purposes.

The wind turbine foundation 200 connects the wind turbine tower 120 through the jacket substructure 150 with the seabed SB.

In the present particular non-limiting embodiment, the wind turbine foundation 200 comprises four piles 210. Piles 210 consist of elongated cylindrical connecting members made of steel. Piles 210 are driven, i.e. inserted, into the seabed SB.

The wind turbine foundation 200 further comprises corresponding four substantially elongated cylindrical pins 250. Each pin 250 has a connecting end and an opposite, inserting end. The pins 250 are attached to and extend downwards from the jacket substructure 150 of the wind turbine 100 through their connecting ends.

The piles 210 are shaped and sized for receiving the inserting end of the pins 250 so that at least one portion of the length thereof is accommodated therein. For this purpose the inner diameter of the piles 210 is larger than the outer diameter of the corresponding pins 250. The inserting end of the pins 250 may be guided and they may also be slightly tapered for ease of insertion into the piles 210.

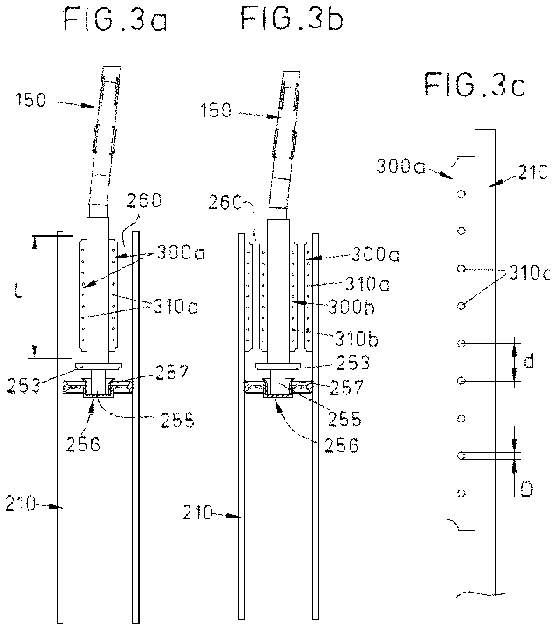

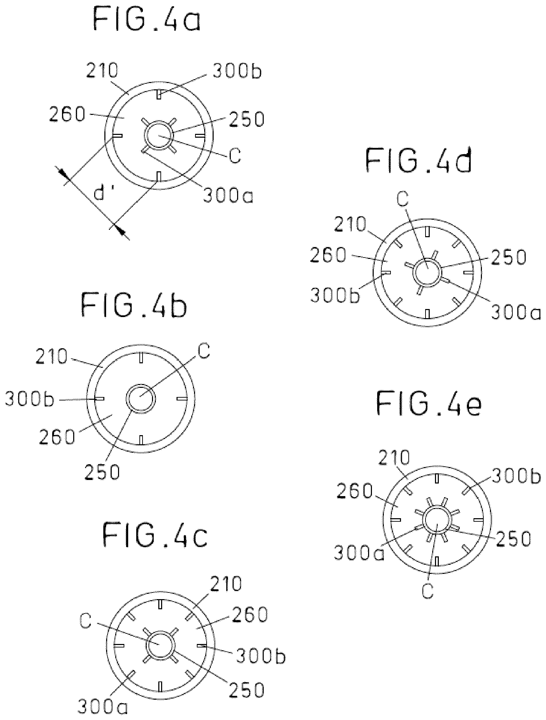

A grouting chamber 260 is defined. It is formed by the annular space between the pins 250 and the piles 210 when the former are at least partially inserted into the latter. The grouting chamber 260 of the wind turbine foundation 200 is suitable for receiving grout. Figures 3a - 3b and 4a - 4e clearly shows the grouting chamber 260.

A number of connecting plates, 300a, 300b are provided. Examples of connecting plates, 300a, 300b are shown in figures 3a - 3c and 4a - 4e of the drawings. They can be steel connecting plates 300a, 300b attached to the pins 250 or the piles 210 (or both) at least some of which do not radially extend inside the grouting chamber 260. In examples that are not part of the invention, all the plates 300a, 300b radially extend inside the grouting chamber 260. Attachment of the connecting plates 300a, 300b to the piles 210 and/or pins 250 may be carried our through a single weld pass process.

A number of embodiments are envisaged for the connecting plates 300a, 300b. Some of said embodiments are briefly explained below. The following arrangements can be combined with each other.

For example, there could be only connecting plates 300a attached to the pins 250, as shown in figure 3a, or to the piles 210, as shown in figure 4b. Alternatively, there could be connecting plates 300a attached to the pins 250 and there could be also connecting plates 300b attached to the piles 210, such as shown in figures 3b, 4a, 4c, 4d and 4e of the drawings.

In any case, a number of connecting plates 300a, 300b in range from 2 to 16 is preferred. For example, each of the pile 210 and the pin 250 are both provided with four connecting plates 300a, 300b in figure 4a. Alternatively, in figure 4b the pile 210 is provided with four connecting plates 300b. In the embodiment in figures 4c and 4d, the pile 210 is provided with eight connecting plates 300b while the pin 250 is provided with four connecting plates 300a. In figure 4c four connecting plates 300a are provided which are aligned with corresponding four of the eight connecting plates 300b of the pile 210. In figure 4d four connecting plates 300a are provided which are not aligned with corresponding four of the eight connecting plates 300b of the pile 210. Finally, in figure 4e each of the pile 210 and the pin 250 are both provided with eight connecting plates 300a, 300b that are not aligned with each other.

At least some of the connecting plates 300b of the pin 250 may be substantially aligned with at least some of the corresponding connecting plates 300a of the pile 210 as shown in the embodiment in figure 4c.

At least some of the connecting plates 300a, 300b may extend a length L of at least one of the piles 210 and the pins 250 within the chamber 260 as shown in figures 3a and 3b. However, at least some of the connecting plates 300a, 300b of at least one of the piles 210 and the pins 250 could project outwards the chamber 360.

At least some of the connecting plates 300a, 300b may extend at least partially across the inside of the grouting chamber 260 as shown in figures 3a and 3b and 4a - 4e.

Although not shown, at least some of the connecting plates 300a, 300b extend inside the chamber 260 such that they are not aligned with the centre C of the pin 250 and/or the pile 210.

At least some of the connecting plates 300a, 300b may be radially distributed along the perimeter of the pin 250 and/or the pile 210 as shown in figures 3a and 3b and 4a - 4e.

At least some of the connecting plates 300a, 300b may be arranged symmetrically around the surface of the pin 250 and/or the pile 210. The connecting plates 300a, 300b may evenly distributed on the perimeter of the pin 250 and/or the pile 210 although in some cases the connecting plates 300a, 300b may arranged only in some portions of the perimeter of the pin 250 and/or the pile 210.

In any of the above cases, at least some of the connecting plates 300a, 300b are of the Perfobond type. More specifically, they are longitudinal plates provided with a number of holes 310a, 310b. Holes 310a, 310b are sized suitably such that the grout inside the chamber 260 passes when in use, that is when the pins 250 are at least partially inserted into corresponding the piles 210. In the present embodiments, the holes 310a, 310b in the Perfobond connecting plates 300a, 300b are circular in shape. Other suitable shapes are however not ruled out.

In the example illustrated in figure 3c, some design parameters of a Perfobond connecting plate 300a are depicted. In the embodiment in figure 3c the ratio of the distance d between the centres of two adjacent holes 310a in a connecting plate 300a to the diameter D of the holes 310a in said connecting plate 300a is shown. In said embodiment, such ratio lies from 2.20 to 2.40. In some cases, the ratio of the distance d' (see figure 4a) between two adjacent connecting plates to the perimeter of the pin 250 or the pile 210, or both the pin 250 and the pile 210, may range from 1/2 to 1/16.

Turning back to figures 3a and 3b of the drawings, the inserting end of at least some of the pins 250 may be a guiding end 255. The guiding end 255 is provided at a lower portion of the pins 250, opposite to the connection end of the pin 250 where the pin 250 is connected with the tower 120 of the wind turbine 100.

A stopping element 256 may be also provided. The stopping element 256 is radially arranged, welded to an inner wall 211 of the pile 210 within the grouting chamber 260 extending radially therein. Specifically, the stopping element 256 is arranged inside the pile 210 on a plane substantially transversal to a longitudinal axis 252 of the pile 210 as shown in figures 3a, 3b, and 5 - 7.

The stopping element 256 is adapted to receive the guiding end 255. As shown in said figures 3a, 3b and 5 - 7 the stopping element 256 includes a central seat 254 provided with a cup 257 made of a polymeric material such as a high grade polymeric material in which cup 257 the guiding end 255 of the pin 250 is fitted. A disc 258 is also provided extending radially between the central seat 254 and the inner wall 211 of the pile 210.

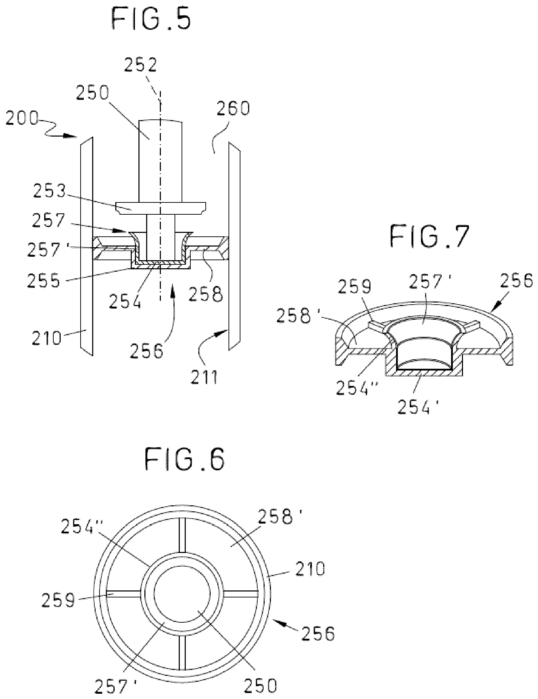

The cross-section of the guiding end 255 is smaller than that of the rest of the pin 250. In the intersection of the cross-section of the guiding end 255 and the pin 250, the pin 250 has a protruding element, e.g. an annular ring or disc 253 for centralizing the pin 250 when it is being inserted into the pile 210. This can be seen in figures 3a, 3b and 5.

The central seat 254' in the embodiment of figures 6 and 7 comprises an upward protrusion 254". This upward protrusion 254" is integrally formed with the central seat 254' such that both, the central seat 254' and the upward protrusion 254", define a cup shaped seat. The cup shaped seat comprises a cup body 257' made of a polymeric material such as a high grade polymeric material. The cup body 257' as shown in the figures 6 and 7 is concentrically arranged on the inner surface of the upward protrusion 254" (and on the central seat inner surface).

In the example shown in said figures 6 and 7 four bars 259 are provided in a cross configuration between the central seat 254 and an inner wall of the pile 210. The bars 259 in any case may radially extend between the central seat 254, 254' and the inner wall of the pile 210. Disc segments 258' are also provided in between these bars 259.

Although only a number of particular embodiments and examples of the present wind turbine foundation have been disclosed herein, it will be understood by those skilled in the art that other alternative embodiments and/or uses and obvious modifications and equivalents thereof are possible. Furthermore, the present disclosure covers all possible combinations of the particular embodiments described. Reference signs related to drawings and placed in parentheses in a claim, are solely for attempting to increase the intelligibility of the claim, and shall not be construed as limiting its scope. Thus, the scope of the present disclosure should not be limited by particular embodiments, but should be determined only by a fair reading of the claims that follow.

## Claims

1. Wind turbine foundation (200) comprising at least one substantially elongated pin (250) to be attached to a wind turbine tower (120) and at least one corresponding substantially elongated pile (210) to be inserted into a surface (SB) and adapted for receiving at least one portion of the length (L) of the pin (250) when in use, a grouting chamber (260) being defined between the pin (250) and the pile (210) when in use for receiving grout, at least one of the pin (250) and the pile (210) being provided with at least one connecting plate (300a, 300b) extending inside the grouting chamber (260), the connecting plates (300a, 300b) being provided with holes (310a, 310b) through which the grout passes when in use,
**characterized in that** at least some of the connecting plates (300a, 300b) are arranged to extend inside the grouting chamber (260) from at least one of the pin (250) or the pile (210) such that they are not aligned with the centre (C) of at least one of the pin (250) or the pile (210).

2. Wind turbine foundation (200) of any of the preceding claims, wherein at least some of the connecting plates (300a, 300b) are radially distributed along the perimeter of the at least one of the pin (250) or the pile (210).

3. Wind turbine foundation (200) of any of the preceding claims, wherein at least some of the connecting plates (300a, 300b) extend along at least one length (L) of the at least one of the pin (250) or the pile (210).

4. Wind turbine foundation (200) of claim 3, wherein at least some of the connecting plates (300a, 300b) are attached to the at least one of the pin (250) or the pile (210) by a single weld pass.

5. Wind turbine foundation (200) of any of the preceding claims, wherein a number of connecting plates (300a, 300b) ranging from 2 to 16 are provided extending inside the grouting chamber (260).

6. Wind turbine foundation (200) of any of the preceding claims, wherein the ratio of the distance (d') between two adjacent connecting plates to the perimeter of at least one of the pin (250) or the pile (210) ranges from 1/2 to 1/16.

7. Wind turbine foundation (200) of any of the preceding claims, wherein the ratio of the distance (d) between the centres (c) two adjacent holes (310a, 310b) in a connecting plate (300a, 300b) to the diameter (D) of the holes (310a, 310b) ranges from 2.20 to 2.40.

8. Wind turbine foundation (200) of any of the preceding claims, wherein both the pin (250) and the pile (210) are provided with connecting plates (300a, 300b), with at least some of the connecting plates (300a) of the pin (250) being substantially aligned with at least some of the corresponding connecting plates (300b) of the pile (210).

9. Wind turbine foundation (200) of claim 8, wherein the at least some of the connecting plates (300a, 300b) extend substantially covering the width of the grouting chamber (260).

10. Wind turbine foundation (200) of any of the preceding claims, wherein at least some of the connecting plates (300a, 300b) are arranged symmetrically around the surface of at least one of the pin (250) or the pile (210).

11. Wind turbine foundation (200) of any of the preceding claims, wherein both the pin (250) and the corresponding pile (210) are cylindrical in shape.

12. Wind turbine foundation (200) of any of the preceding claims, wherein at least some of the pins (210) has a guiding end (255) arranged opposite to a connecting end, said connecting end being associated with the wind turbine tower (120), and a stopping element (256) extending inside the grouting chamber (260), said stopping element (256) being adapted to receive the guiding end (255) of the pins (210) when the pin (250) is inserted into the pile (210).

13. Wind turbine foundation (200) of claim 12, wherein the stopping element further comprises a plurality of bars radially extending between the central seat and an inner surface of the pile.

14. Wind turbine (100) comprising a wind turbine foundation (200) as claimed in of any of the preceding claims.

## Patentansprüche

1. Windturbinenfundament (200) umfassend mindestens einen im Wesentlichen länglichen Zapfen (250), der an einem Windturbinenturm (120) zu befestigen ist und mindestens einen entsprechenden im Wesentlichen länglichen Pfahl (210), der in eine Oberfläche (SB) einzuführen ist und angepasst ist, um mindestens einen Teil der Länge (L) des Zapfens (250) im Einsatz zu empfangen, eine Vergusskammer (260), die im Einsatz zwischen dem Zapfen (250) und dem Pfahl (210) zum Empfang von Vergussmörtel definiert ist, wobei mindestens einer von dem Zapfen (250) und dem Pfahl (210) mit mindestens einer sich innerhalb der Vergusskammer (260) erstreckenden Verbindungsplatte (300a, 300b) versehen ist, wobei die Verbindungsplatten (300a, 300b) mit Bohrungen (310a, 310b) verstehen sind, durch die der Vergussmörtel im Einsatz durchströmt,
**dadurch gekennzeichnet, dass** mindestens manche Verbindungsplatten (300a, 300b) so angeordnet sind, dass sie sich innerhalb der Vergusskammer (260) von mindestens einem vom Zapfen (250) oder vom Pfahl (210) an erstrecken, so dass sie mit dem Mittelpunkt (C) von mindestens einem vom Zapfen (250) oder vom Pfahl (210) nicht fluchten.

2. Windturbinenfundament (200) von einem der vorhergehenden Ansprüche, wobei mindestens manche Verbindungsplatten (300a, 300b) entlang des Umfangs vom mindestens einen vom Zapfen (250) oder vom Pfahl (210) radial verteilt sind.

3. Windturbinenfundament (200) von einem der vorhergehenden Ansprüche, wobei mindestens manche Verbindungsplatten (300a, 300b) sich entlang mindestens einer Länge (L) vom mindestens einen vom Zapfen (250) oder vom Pfahl (210) erstrecken.

4. Windturbinenfundament (200) des Anspruchs 3, wobei mindestens manche Verbindungsplatten (300a, 300b) an dem mindestens einen vom Zapfen (250) oder vom Pfahl (210) mittels einer einzelnen Schweißlage befestigt sind.

5. Windturbinenfundament (200) von einem der vorhergehenden Ansprüche, wobei eine von 2 bis 16 reichende Anzahl von sich innerhalb der Vergusskammer (260) erstreckenden Verbindungsplatten (300a, 300b) bereitgestellt sind.

6. Windturbinenfundament (200) von einem der vorhergehenden Ansprüche, wobei das Verhältnis von der Entfernung (d') zwischen zwei angrenzenden Verbindungsplatten zum Umfang von mindestens einem vom Zapfen (250) oder vom Pfahl (210) von 1/2 bis 1/16 reicht.

7. Windturbinenfundament (200) von einem der vorhergehenden Ansprüche, wobei das Verhältnis von der Entfernung (d) zwischen den Mittelpunkten (c) von zwei angrenzenden Bohrungen (310a, 310b) in einer Verbindungsplatte (300a, 300b) zum Durchmesser (D) der Bohrungen (310a, 310b) von 2,20 bis 2,40 reicht.

8. Windturbinenfundament (200) von einem der vorhergehenden Ansprüche, wobei sowohl der Zapfen (250) als auch der Pfahl (210) mit Verbindungsplatten (300a, 300b) versehen sind, wobei mindestens manche Verbindungsplatten (300a) des Zapfens (250) im Wesentlichen mit mindestens manchen entsprechenden Verbindungsplatten (300b) des Pfahls (210) fluchten.

9. Windturbinenfundament (200) des Anspruchs 8, wobei die mindestens manchen Verbindungsplatten (300a, 300b) sich derart erstrecken, dass sie im Wesentlichen die Breite der Vergusskammer (260) decken.

10. Windturbinenfundament (200) von einem der vorhergehenden Ansprüche, wobei mindestens manche Verbindungsplatten (300a, 300b) symmetrisch um die Oberfläche von mindestens einem vom Zapfen (250) oder vom Pfahl (210) angeordnet sind.

11. Windturbinenfundament (200) von einem der vorhergehenden Ansprüche, wobei sowohl der Zapfen (250) als auch der entsprechende Pfahl (210) zylindrisch sind.

12. Windturbinenfundament (200) von einem der vorhergehenden Ansprüche, wobei mindestens manche von den Zapfen (210) ein gegenüber einem Verbindungsende angeordnetes Führungsende (255) haben, wobei das Verbindungsende mit dem Windturbinenturm (120) verknüpft ist, und ein sich innerhalb der Vergusskammer (260) erstreckendes Anhalteelement (256) haben, wobei das Anhalteelement (256) angepasst ist, um das Führungsende (255) der Zapfen (210) zu empfangen, wenn der Zapfen (250) in den Pfahl (210) eingeführt wird.

13. Windturbinenfundament (200) des Anspruchs 12, wobei das Anhalteelement weiterhin eine Vielzahl von sich radial zwischen dem Mittelsitz und einer inneren Oberfläche des Pfahls erstreckenden Stäben umfasst.

14. Windturbine (100) umfassend ein Windturbinenfundament (200) wie in einem der vorhergehenden Ansprüche beansprucht.

## Revendications

1. Fondation d'éolienne (200) comprenant au moins un tenon (250) essentiellement allongé à être attaché à une tour d'éolienne (120) et au moins un pieu (210) correspondant essentiellement allongé à être inséré dans une surface (SB) et adapté pour recevoir au moins une partie de la longueur (L) du tenon (250) lors du fonctionnement, une chambre d'injection (260) définie entre le tenon (250) et le pieu (210) lors du fonctionnement pour recevoir du coulis, étant au moins un du tenon (250) et du pieu (210) fourni avec au moins une plaque de raccordement (300a, 300b) s'étendant dans la chambre d'injection (260), étant les plaques de raccordement (300a, 300b) fournies avec des trous (310a, 310b) à travers lesquels le coulis passe lors du fonctionnement,
**caractérisée en ce qu'**au moins quelques-unes des plaques de raccordement (300a, 300b) sont disposées de façon à s'étendre dans la chambre d'injection (260) dès au moins un du tenon (250) ou du pieu (210) de façon qu'elles ne sont pas alignées avec le centre (C) d'au moins un du tenon (250) ou du pieu (210).

2. Fondation d'éolienne (200) de l'une quelconque des revendications précédentes, dans laquelle au moins quelques-unes des plaques de raccordement (300a, 300b) sont distribuées radialement le long du périmètre de l'au moins un du tenon (250) ou du pieu (210).

3. Fondation d'éolienne (200) de l'une quelconque des revendications précédentes, dans laquelle au moins quelques-unes des plaques de raccordement (300a, 300b) s'étendent le long d'au moins une longueur (L) de l'au moins un du tenon (250) ou du pieu (210).

4. Fondation d'éolienne (200) de la revendication 3, dans laquelle au moins quelques-unes des plaques de raccordement (300a, 300b) sont attachées à l'au moins un du tenon (250) ou du pieu (210) moyennant un seul passage de soudure.

5. Fondation d'éolienne (200) de l'une quelconque des revendications précédentes, dans laquelle un nombre de plaques de raccordement (300a, 300b) allant de 2 à 16 sont fournies s'étendant dans la chambre d'injection (260).

6. Fondation d'éolienne (200) de l'une quelconque des revendications précédentes, dans laquelle le rapport de la distance (d') entre deux plaques de raccordement adjacentes au périmètre d'au moins un du tenon (250) ou du pieu (210) va de 1/2 à 1/16.

7. Fondation d'éolienne (200) de l'une quelconque des revendications précédentes, dans laquelle le rapport de la distance (d) entre les centres (c) de deux trous adjacents (310a, 310b) dans une plaque de raccordement (300a, 300b) au diamètre (D) des trous (310a, 310b) va de 2,20 à 2,40.

8. Fondation d'éolienne (200) de l'une quelconque des revendications précédentes, dans laquelle tant le tenon (250) que le pieu (210) sont fournis avec des plaques de raccordement (300a, 300b), étant au moins quelques-unes des plaques de raccordement (300a) du tenon (250) essentiellement alignées avec au moins quelques-unes des correspondantes plaques de raccordement (300b) du pieu (210).

9. Fondation d'éolienne (200) de la revendication 8, dans laquelle les au moins quelques-unes des plaques de raccordement (300a, 300b) s'étendent essentiellement couvrant la largeur de la chambre d'injection (260).

10. Fondation d'éolienne (200) de l'une quelconque des revendications précédentes, dans laquelle au moins quelques-unes des plaques de raccordement (300a, 300b) sont disposées symétriquement autour de la surface d'au moins un du tenon (250) ou du pieu (210).

11. Fondation d'éolienne (200) de l'une quelconque des revendications précédentes, dans laquelle tant le tenon (250) que le pieu (210) correspondant sont cylindriques.

12. Fondation d'éolienne (200) de l'une quelconque des revendications précédentes, dans laquelle au moins quelques-uns des tenons (210) ont une extrémité de guidage (255) disposée en face d'une extrémité de raccordement, étant ladite extrémité de raccordement associée avec la tour d'éolienne (120), et un élément d'arrêt (256) s'étendant dans la chambre d'injection (260), étant ledit élément d'arrêt (256) adapté pour recevoir l'extrémité de guidage (255) des tenons (210) lorsque le tenon (250) est insérée dans le pieu (210).

13. Fondation d'éolienne (200) de la revendication 12, dans laquelle l'élément d'arrêt comprend en outre une pluralité de barres s'étendant radialement entre l'appui central et une surface intérieure du pieu.

14. Éolienne (100) comprenant une fondation d'éolienne (200) telle que revendiquée dans l'une quelconque des revendications précédentes.
